# EUROPÄISCHE PATENTSCHRIFT

(11) **EP 2 110 467 B1**
(45) Veröffentlichungstag und Bekanntmachung des Hinweises auf die Patenterteilung: **22.09.2010**
(21) Anmeldenummer: 09002107.2
(22) Anmeldetag: 16.02.2009
(51) Int. Cl.: D01F 2/24, D04H 1/00, D04H 3/00, C08B 15/06

(54) **Cellulosecarbamat-Spinnlösung sowie Verfahren zur Herstellung eines Cellulosecarbamat-Vliesstoffes**
Cellulose carbamate spinning solution, and method for producing a cellulose carbamate non-woven fabric
Solution de filage de carbamate de cellulose, et procédé de fabrication d'une étoffe nappée de carbamate de cellulose

(30) Priorität: 14.04.2008 DE 102008018746
(43) Veröffentlichungstag der Anmeldung: 21.10.2009
(73) Patentinhaber: Fraunhofer-Gesellschaft zur Förderung der angewandten Forschung e.V., 80686 München (DE)
(72) Erfinder: Ebeling, Horst, 14727 Premnitz (DE); Fink, Hans-Peter, 14513 Teltow (DE)
(74) Vertreter: Pfenning, Meinig & Partner GbR

(56) Entgegenhaltungen:
- EP-A- 0 178 292
- EP-A- 0 879 906
- WO-A-2007/000319
- DE-A1- 19 757 958

## Beschreibung

Vorliegende Erfindung betrifft eine Cellulosecarbamat-Spinnlösung, wobei das Cellulosecarbamat in einer ionischen Flüssigkeit gelöst ist. Die Erfindung betrifft weiterhin ein Verfahren zur Herstellung von Vliesstoffen, bei dem die Cellulosecarbamat-Spinnlösung durch die Löcher eines Düsenbalkens gedrückt wird und durch einen Luftstrom um ein Vielfaches verstreckt wird. Der gebildete Faservorhang wird auf einem perforierten Transportband abgelegt, gewaschen und getrocknet. Ebenso werden derartige Vliesstoffe sowie deren Verwendung beschrieben.

Nonwovens sind textile Flächengebilde, bei denen die Flächenbildung nicht durch Weben oder Stricken, sondern durch Verhakelung der Fasern mit anschließender Fixierung erfolgt. Wegen der vielseitigen Verwendungsmöglichkeiten und der im Vergleich zu gestrickten und gewebten Flächengebilden vergleichsweise niedrigen Produktionskosten weisen Nonwovens nach wie vor hohe jährliche Wachstumsraten auf.

Die Vorteile dieser Vliesmaterialien liegen in einer hohen Feuchtigkeitsaufnahme, die Herstellungsverfahren erlauben eine hohe Variabilität in Dichte und Dicke, was zu einer weitgehenden Flächenisotropie führt. Aus diesen vorteilhaften Eigenschaften ergeben sich zahlreiche Verwendungsmöglichkeiten in der Medizin für Hygieneprodukte,z.B. OP-Abdecktücher, Betttücher, Wundabdeckungen, Gaze, usw., im Haushalt als Wischtücher aller Art und als Dekorationsvliesstoffe, z.B. Tischdecken, Servietten, usw., in der Bekleidungsindustrie als Einlagevliese sowie auch für technische Anwendungen, z.B. Isoliermatten, Abdeckmatten, usw.

Viskosefasern (Celluloseregeneratfasern) werden bevorzugt als Kurz- oder Stapelfasern zur Nonwovens-Herstellung eingesetzt. Nonwovens auf Basis von Celluloseregeneratfasern besitzen aufgrund ihres Eigenschaftspotentials einen erheblichen Marktanteil mit einem erwarteten kontinuierlichen Wachstum.

Da das Viskoseverfahren, nach dem noch immer der größte Teil der Celluloseregeneratfasern hergestellt wird, mit erheblichen Umweltbelastungen (Schwefelkohlenstoff, Schwefelwasserstoff, Schwermetalle) und hohen Investitionskosten verbunden ist, werden bereits seit Jahren Anstrengungen unternommen, das Viskoseverfahren durch alternative Verfahren abzulösen. Entwickelt wurden Verfahren auf Basis des direkten Lösens von Zellstoff in einem geeigneten Lösungsmittel bzw. alternative Derivatisierungsvarianten ohne Schwefelkohlenstoff. Diese Aktivitäten erstreckten sich auch auf die Herstellung von Nonwovens aus Cellulose.

Das sogenannte "Bemliese"-Verfahren, bei dem Baumwolllinters nach dem Cuproammoniumverfahren zu Vlies verformt wird, ist eines der ersten vorgeschlagenen Spinnvliesverfahren zur Herstellung von cellulosischen Nonwovens aus Endlosfilamenten (US 3,833,438).

Die Verformung von Schmelzen synthetischer Polymere durch Extrusion der Schmelze durch feine Düsenlöcher in einen in Faserrichtung strömenden Gasstrom, durch den die Faser abgekühlt und dabei gezogen und auf ein Mehrfaches ihrer Länge verstreckt wird, ist ein seit längerem bekanntes Verfahren zur Nonwoven-Herstellung. Dieser auch als "Schmelzblasen" (meltblown) bezeichnete Prozess ist geeignet für die Herstellung von Mikrofasern. In der Europäischen Patentschrift EP 0 920 548 B1 wird die Anwendung des Schmelzblasens auch für Lösungen von Cellulose in Amin-Oxiden, bevorzugt N-Methylmorpholin-N-Oxid (NMMO), beansprucht. Das Verfahren wird stark durch die Viskosität der Cellulose/NMMO-Lösung beeinflusst, diese wiederum wird durch das Polymer (Cellulose), das Molekulargewicht (DP der Cellulose) sowie die Konzentration bestimmt.

Ein weiteres bekanntes, umweltfreundliches Verfahren zur Herstellung von cellulosischen Fasern und Formkörpern basiert auf dem Ausfällen von Cellulosecarbamat aus einer Lösung dieses Cellulosederivats in Natronlauge (EP 57 105, EP 178 292). Cellulosecarbamat wird bei der Umsetzung von Cellulose mit Harnstoff bei erhöhter Temperatur gebildet und lässt sich in kalter verdünnter Natronlauge lösen.

Nachteilig für die Produktivität aller Cellulose-Nassspinnverfahren, insbesondere auch des NMMO- und des Carbamatverfahrens ist die geringe Feststoffkonzentration der Cellulose in der Spinnlösung, die in der Regel 8 bis 12 % beträgt.

Höhere Spinnlösungskonzentrationen werden durch Lösen von Cellulosecarbamat in NMMO erreicht (WO 2007/000319 A1). Nachteilig wirken sich bei diesem Verfahren die hohen Spinnlösungsviskositäten aus. Die Spinnlösungsherstellung erfolgt durch Quellen des Cellulosecarbamats in einer 40 bis 70%igen Mischung NMMO/Wasser und anschließendem Abdestillieren von Wasser, was erhebliche Lösezeiten und einen höheren Energiebedarf erfordert. Ebenso werden hier Vliesstoffe aus Cellulosecarbamat sowie deren Verwendung angegeben.

Als weiteres Lösungsmittel für Cellulose wurden in jüngerer Zeit die ionischen Flüssigkeiten beschrieben. Ionische Flüssigkeiten sind Salze, die aus einem cyclischen, meist stickstoffhaltigen Kation und einem organischen oder anorganischen Anion aufgebaut sind und einen Schmelzpunkt unter 100 °C besitzen. Möglichkeiten zur Synthese von ionischen Flüssigkeiten, der Einsatz als Medium in chemischen Umsetzungen und auch als Lösungsmittel für Cellulose sowie die Verformung dieser Lösungen zu Fasern sind in nachfolgend genannter Veröffentlichung beschrieben (G. Laus, G. Bentivoglio, H. Schottenberger, V. Kahlenberg, H. Kopacka, T. Röder, H. Sixta "Ionic Liquids: Current Developments, Potential and Drawbacks for Industrial Applications" in Lenzinger Berichte, 84 (2005), 71-85).

In der WO 2006/000197 werden Verfahren und Vorrichtung zur Herstellung von Formkörpern aus Lösungen von Cellulose in ionischen Flüssigkeiten beschrieben. Die Zellstoffe werden hier in Wasser aufgeschlagen und in feuchter Form dem Löseprozess zugeführt. Das bedeutet, dass das Wasser während des Lösens entfernt werden muss, wodurch die Lösezeit und der Energiebedarf beeinflusst werden. Die beschriebenen Spinnlösungen mit Konzentrationen bis zu 20 % haben sehr hohe Nullscherviskositäten.

Ausgehend hiervon war es Aufgabe der vorliegenden Erfindung, eine Cellulosecarbamat-Spinnlösung bereitzustellen, bei der das Cellulosecarbamat in hohen Konzentrationen in gelöster Form vorliegt. Ebenso war es Aufgabe der vorliegenden Erfindung, ein Verfahren zur Herstellung eines Vliesstoffes aus Cellulosecarbamat unter Verwendung der erfindungsgemäßen Spinnlösung bereitzustellen. Weitere Aufgaben der vorliegenden Erfindung betreffen die Bereitstellung eines entsprechend hergestellten Cellulosecarbamat-Vliesstoffes sowie Verwendungsmöglichkeiten des Vliesstoffes.

Diese Aufgabe wird bezüglich der Cellulosecarbamat-Spinnlösung mit den Merkmalen des Patentanspruchs 1, bezüglich des Verfahrens zur Herstellung eines Cellulosecarbamat-Vliesstoffes mit den Merkmalen des Patentanspruchs 10 gelöst. Die jeweiligen abhängigen Ansprüche stellen dabei vorteilhafte Weiterbildungen dar.

Erfindungsgemäß wird somit eine Spinnlösung aus Cellulosecarbamat bereitgestellt, wobei das Cellulosecarbamat in mindestens einer ionischen Flüssigkeit gelöst ist. Erfindungsgemäß beträgt dabei die Cellulosecarbamatkonzentration der Spinnlösung mindestens 15 Gew.-% und die Nullscherviskosität, gemessen bei 100 °C, liegt dabei in einem Bereich von 50 bis 7500 Pas.

Überraschenderweise zeigte sich, dass Cellulosecarbamat sich bis zu hohen Konzentrationen in ionischen Flüssigkeiten löst und zu Vliesstoffen mit hohen Festigkeiten verformt werden kann. Ebenfalls überraschend zeigte sich, dass die hochkonzentrierten Lösungen verglichen zu Cellulose in ionischen Flüssigkeiten und auch zu Cellulosecarbamat in NMMO weitaus geringere Nullscherviskositäten bei der Verarbeitungstemperatur besitzen.

Zur Herstellung der erfindungsgemäßen Spinnlösung wird Cellulosecarbamat unter Rühren oder Kneten bei Temperaturen oberhalb 80 °C in einer ionischen Flüssigkeit gelöst und die resultierende Spinnlösung filtriert.

Vorzugsweise wird getrocknetes Cellulosecarbamat zur Spinnlösungsherstellung eingesetzt und die Spinnlösung durch mechanische Vermischung bei Temperaturen zwischen 80 und 120 °C, bevorzugt zwischen 90 und 100 °C gebildet. Bei Verwendung von wasserhaltigem Cellulosecarbamat erfolgt das Lösen durch Kneten bei gleichzeitigem Entzug des Wassers unter reduziertem Druck, z.B. kleiner 0,9 bar.

In einer vorteilhaften Ausführungsform liegt der Schmelzpunkt der mindestens einen ionischen Flüssigkeit unter 100 °C, bevorzugt unter 75 °C, besonders bevorzugt unter 50 °C.

Die mindestens eine ionische Flüssigkeit ist dabei erfindungsgemäß ausgewählt aus der Gruppe bestehend aus Ammonium-, Pyrazolium-, Cholinium-, in 1- und 3-Stellung alkyl- oder arylsubstituierten Imidazoliumverbindungen und/oder Mischungen hieraus. Bevorzugte ionische Flüssigkeiten sind Butyl-methyl-imidazoliumacetat, Butyl-methyl-imidazoliumchlorid, Ethyl-methyl-imidazoliumchlorid, Ethyl-methyl-imidazoliumacetat, Butyl-ethyl-imidazoliumacetat, Butyl-ethylimidazoliumchlorid, Methyl-tetradecyl-imidazoliumchlorid, Butyl-methyl-imidazoliumbromid, Butyl-methyl-pyridiniumchlorid, Butyl-methyl-imidazoliumthiocyanat, Ethyl-methyl-imidiazoliumthiocyanat, Butyl-ethyl-imidazoliumthiocyanat, Hexyl-dimethylimidazoliumhexafluoroborat, Ethoxymethyl-methylpyrrolidiniumchlorid, Hydroxypropyl-methyl-imidazoliumacetat, Hydroxypropyl-methyl-imidazoliumchlorid und/oder Butyl-methyl-pyridiniumchlorid.

Weitere Vorteile ergeben sich, wenn das Cellulosecarbamat einen DP_{cuoxam} von 150 bis 750, bevorzugt von 250 bis 550 aufweist.

Ebenso ist es bevorzugt, wenn das Cellulosecarbamat einen Substitutionsgrad DS_{Carbamat} von 0,1 bis 1, bevorzugt von 0,2 bis 0,6 aufweist.

Als besonderer Vorteil der vorliegenden Erfindung ist hervorzuheben, dass sich durch Lösen des Cellulosecarbamats in einer ionischen Flüssigkeit hohe Konzentrationen des Cellulosecarbamats in Lösung einstellen lassen. So kann die Cellulosecarbamat-Konzentration hohe Konzentrationswerte, vorteilhaft zwischen 20 und 50 Gew.-%, weiter bevorzugt zwischen 20 und 40 Gew.-%, besonders bevorzugt zwischen 20 und 30 Gew.-% einnehmen.

Weitere Vorteile der erfindungsgemäßen Spinnlösung sind darin zu sehen, dass sich trotz des hohen Cellulosecarbamat-Gehaltes geringe Nullscherviskositäten ergeben. Bevorzugte Bereiche der Nullscherviskosität, gemessen bei 100 °C, liegen dabei im Bereich von 50 bis 5000 Pas, bevorzugt von 150 bis 2500 Pas und besonders bevorzugt von 250 bis 1250 Pas.

Erfindungsgemäß wird ebenso ein Verfahren zur Herstellung eines Cellulosecarbamat-Vliesstoffes bereitgestellt, wobei eine erfindungsgemäße Spinnlösung in einem Schmelzblasprozess durch einen Düsenblock mit mindestens 20 Düsenlöchern extrudiert wird, die aus dem Düsenblock austretenden Fasern durch einen temperierbaren Luftstrom verstreckt sowie durch Besprühen mit einer Koagulationsflüssigkeit koaguliert werden und anschließend entweder
a) die Fasern als Endlosfasern ausgebildet werden und daraus ein Wirrgelege gebildet wird, oder
b) die Fasern als Fasern mit endlicher Länge ausgebildet werden und daraus ein Wirrgelege hergestellt wird.

Prinzipiell ist die Vliesbildung aus Kurzfasern, Stapelfasern oder Endlosfilamenten möglich. Die Florbildung für Schnittfasern erfolgt nach dem Trocken- oder auch Nassvliesverfahren. Bei ersterem werden die in Ballenform angelieferten Stapelfasern mittels Krempel oder Karde zum Vlies gekämmt und auf einem Band abgelegt. Beim Nassvliesverfahren erfolgt die Florbildung durch Auftragen einer Suspension aus Faser und Wasser auf ein perforiertes Siebband mit anschließendem Abpressen des Wassers. Die gebildeten Vliese können dann durch Vernadelung, thermischer und/oder chemischer Behandlung oder auch mittels Wasserstrahl weiter verfestigt werden.

Bei der Herstellung von Spinnvliesstoffen erfolgt die direkte Verknüpfung von Spinn- und Vliesbildungsprozess. Sowohl Schmelz- und Trockenspinnverfahren als auch Nassspinnverfahren sind für die Vliesbildung auf Basis von Endlosfasern geeignet. Als Ausgangsmaterialien für die Vliesstoffe ist eine Vielzahl von faserbildenden Polymeren bekannt. Vliesstoffe aus Endlosmaterialien werden bevorzugt aus Polyester und Polypropylen (Schmelzspinnen - Meltblown Nonwovens) sowie Polyacrylnitril (Nassspinnen - Spunlaid Nonwovens hergestellt.

Bevorzugt wird nach dem Schmelzblasverfahren eine Lösung von Cellulosecarbamat in einer ionischen Flüssigkeit durch einen Düsenblock mit mindestens 20 Düsenlöchern gepresst, die aus den Düsenlöchern austretenden Fäden durch einen temperierten Luftstrom verstreckt und abgekühlt, durch Besprühen mit Wasser oder einem Gemisch aus Wasser und ionischer Flüssigkeit koaguliert und anschließend mit hoher Geschwindigkeit auf einem perforierten Band unter Ausbildung eines Wirrgeleges abgelegt, in der die Einzelfasern selbstbindend sind und anschließend das Lösungsmittel durch Waschen mit Wasser entfernt wird. Dem gebildeten Web kann durch Wasserstrahlverfestigung im Zustand vor der Trocknung eine höhere Festigkeit verliehen werden, durch Kalandrieren und Ausrüsten können die Oberflächenmerkmale den späteren Anwendungen angepasst werden.

In einer vorteilhaften Ausgestaltungsform des Verfahrens wird die Spinnlösung durch einen Düsenblock mit 150 bis 10.000, bevorzugt 500 bis 5.000 Düsenlöchern pro Meter, extrudiert.

Dabei ist es bevorzugt, wenn der Durchmesser der Düsenlöcher unabhängig voneinander von 0,05 bis 1 mm, bevorzugt von 0,25 bis 0,6 mm beträgt.

Die Extrusion der Spinnlösung durch den Düsenblock erfolgt dabei bevorzugt in einem Temperaturbereich der Spinnlösung im Düsenblock zwischen 50 und 150 °C, bevorzugt von 80 bis 130 °C, besonders bevorzugt von 90 bis 120 °C.

Vorteilhafte Effekte ergeben sich ebenso, wenn die Spinnlösungsfördermenge pro Düsenloch und Minute von 0,25 bis 5 g, bevorzugt von 0,75 bis 3 g eingestellt wird.

Der für das Abziehen der Fasern von der Düse eingesetzte Luftstrom wird auf 100 bis 190 °C aufgeheizt, vorzugsweise soll sich im Düseninneren eine Lufttemperatur von 100 bis 130 °C einstellen. Der durch den Luftstrom im Düseninneren erzeugte Druck liegt bevorzugt bei 0,03 bis 3,0 bar, besonders bevorzugt zwischen 0,5 und 2 bar.

Dabei ist es bevorzugt, wenn als Koagulationsflüssigkeit Wasser oder eine wässrige Lösung mindestens einer ionischen Flüssigkeit eingesetzt wird, wobei die Gewichtskonzentration der mindestens einen ionischen Flüssigkeit in der wässrigen Lösung bevorzugt von 0,5 bis 50 Gew.-%, bevorzugt von 2 bis 25 Gew.-% beträgt.

Zur weiteren Verarbeitung der durch Extrusion hergestellten Verfahren können optional weitere Verfahrensschritte ausgeführt werden. So kann beispielsweise der Faserflor mit hoher Geschwindigkeit auf einem perforiertern Band abgelegt werden. Dadurch kommt es zum Verhaken der Faser und es wird ein Vlies gebildet, das gute mechanische Eigenschaften besitzt, die durch eine Wasserstrahlverfestigung weiter verbessert werden können. Der Druck des bei der Wasserstrahlfestigung eingesetzten Wasserstrahls kann dabei vorteilhafterweise zwischen 5 und 100 bar betragen. Im Anschluss daran kann sich eine Waschung, Abpressung und/oder Trocknung des Wirrgeleges anschließen. Die Besprühung des sich bei der Extrusion bildenden Faserflors mit der Koagulationsflüssigkeit erfolgt vorteilhafterweise mindestens 10 cm unterhalb der Extrusionsdüse. Ebenso ist es vorteilhaft, wenn die Spinnlösung vor der Extrusion filtriert wird.

Ebenso wird ebenso ein Cellulosecarbamat-Vliesstoff beschrieben, der nach einem im Voranstehenden beschriebenen Verfahren herstellbar ist.

Überraschend wurde nun gefunden, dass aus Lösungen von Cellulosecarbamat in ionischen Flüssigkeiten nach dem Schmelzblasverfahren Vliesstoffe mit hoher Festigkeit und hoher Wasseraufnahme hergestellt werden können, die diese Vliese besonders geeignet machen für den Einsatz in Hygieneartikeln für die Medizin, für Haushaltsartikel, aber auch als Dekorationsvliesstoffe.

Die Vliesstoffe können durch Variation der Regenerierungsbedingungen mit variierendem N-Gehalt hergestellt werden und besitzen in Abhängigkeit vom N-Gehalt ein unterschiedliches Wasseraufnahmevermögen

Die nach dem beanspruchten Verfahren hergestellten Vliesstoffe besitzen bevorzugte Flächengewichte zwischen 10 und 500 g/m², weiter bevorzugt zwischen 20 und 200 g/m², haben ein Wasserrückhaltevermögen, gemessen nach DIN 53814, von mindestens 100 Gew.-%, bevorzugt von 130 bis 200 Gew.-%, und nach dem Konditionieren Festigkeiten in Längsrichtung von mindestens 100 N/m, bevorzugt von 100 bis 5000 N/m und/oder einer Festigkeit in Querrichtung von mindestens 40 N/m, bevorzugt von 80 bis 3000 N/m, gemessen nach der EDANA-Vorschrift 20.2-89. Somit weisen die Fasern vorzugsweise in Längsrichtung eine höhere Festigkeit als in Querrichtung auf.

Verwendung finden die Vliesstoffe vorzugsweise in der Medizin, insbesondere als Operationsabdecktücher, Betttücher, Wundabdeckungen, Gaze oder Wattepads. Ebenso sind die Vliesstoffe auch als Hygienestoffe oder als Wischtücher im Haushalt einsetzbar. Ein weiteres Anwendungsfeld der erfindungsgemäßen Vliesstoffe sind Dekorationsvliesstoffe, insbesondere Tischdecken, Servietten oder Vorhänge sowie Einlagevliese in der Bekleidungsindustrie.

Anhand der nachfolgenden Beispiele soll der erfindungsgemäße Gegenstand näher erläutert werden, ohne diesen auf die hierin beschriebenen Ausführungsformen zu beschränken.

### Beispiel 1

20 g Cellulosecarbamat (DPcuox: 258, DS 0,4) werden mit 80 g Butyl-methyl-imidazoliumacetat gemischt und unter Rühren bei 110 °C in 0,5 Std. gelöst. Die resultierende homogene, dunkelbraune Lösung ist völlig faserfrei. Die Viskosität der Lösung, gemessen bei 100 °C, beträgt 64 Pas.

Die gebildete Spinnlösung hat einen Cellulosecarbamatgehalt von 20 %. Die Spinnlösung mit einer Temperatur von 90 °C wird über ein 50 µ-Filter filtriert und mittels Spinnpumpe durch eine 15 cm breite Düse mit 100 Düsenlöchern vom Durchmesser 0,48 mm mit einer Fördermenge von 0,9 g/Loch/min gedrückt. Die aus den Düsenlöchern austretenden Fasern werden durch vorbeiströmende, auf 125°C erwärmte Luft verstreckt, mit einem Gemisch aus 7,5 % Butyl-methyl-imidazoliumacetat und 92,5 % Wasser unterhalb der Düse besprüht und auf einem Förderband mit einer Geschwindigkeit von 2 m/min abgelegt. Das gebildete Vlies wird gewaschen, abgequetscht und unter Spannung bei Zulassung eines Schrumpfes von 12 % getrocknet.

### Vliesparameter:

Flächengewicht: 67 g/m²
Festigkeit längs (konditioniert): 1356 N/m
Festigkeit quer (konditioniert): 1200 N/m
Wasserrückhaltevermögen (DIN 53814): 181 %

### Beispiel 2

30 g Cellulosecarbamat (DPcuox: 258, DS 0,4) werden mit 70 g Butyl-methyl-imidazoliumacetat gemischt und in einem Horizontalkneter bei 110 °C in 1 Std. gelöst. Die resultierende homogene, dunkelbraune Lösung ist völlig faserfrei. Die Viskosität der Lösung, gemessen bei 100 °C beträgt 1210 Pas. Die Spinnlösung mit einer Temperatur von 90 °C wird über ein 50 p-Filter filtriert und mittels Spinnpumpe durch eine 15 cm breite Düse mit 100 Düsenlöchern vom Durchmesser 0,48 mm mit einer Fördermenge von 0,9 g/Loch/min gedrückt. Die aus den Düsenlöchern austretenden Fasern werden durch vorbeiströmende, auf 125 °C erwärmte Luft verstreckt, mit einem Gemisch aus 7,5 % Butyl-methyl-imidazoliumacetat und 92,5 % Wasser ca. 20 cm unterhalb der Düse besprüht und auf einem Förderband mit einer Geschwindigkeit von 3 m/min abgelegt.

Das gebildete Vlies wird gewaschen, abgequetscht und unter Spannung bei Zulassung eines Schrumpfes von 12 % getrocknet.

### Vliesparameter:

Flächengewicht: 67 g/m²
Festigkeit längs (konditioniert): 1860 N/m
Festigkeit quer (konditioniert):1450 N/m
Wasserrückhaltevermögen (DIN 53814): 178 %

### Beispiel 3

30 g Cellulosecarbamat (DPcuox: 258, DS 0,4) werden mit 70 g Butyl-methyl-imidazoliumacetat gemischt und in einem Horizontalkneter bei 110 °C in 1 Std. gelöst. Die resultierende homogene, dunkelbraune Lösung ist völlig faserfrei. Die Viskosität der Lösung, gemessen bei 100°C beträgt 1210 Pas. Die Spinnlösung mit einer Temperatur von 90 °C wird über ein 50 p-Filter filtriert und mittels Spinnpumpe durch eine 15 cm breite Düse mit 100 Düsenlöchern vom Durchmesser 0,48 mm mit einer Fördermenge von 0,9 g/Loch/min gedrückt. Die aus den Düsenlöchern mit einer Geschwindigkeit von 4 m/min austretenden Fasern werden durch vorbeiströmende, auf 125 °C erwärmte Luft verstreckt, mit einem Gemisch aus 7,5 % Butyl-methyl-imidazoliumacetat und 92,5 % Wasser ca. 20 cm unterhalb der Düse besprüht und auf einem Förderband mit einer Geschwindigkeit von 1 m/min abgelegt. Das gebildete Vlies wird gewaschen, abgequetscht, unter Verwendung von 3 Düsenbalken mit 10,20 und 50 bar wasserstrahlverfestigt und unter Spannung bei Zulassung eines Schrumpfes von 12 % getrocknet.

### Vliesparameter:

Flächengewicht: 67 g/m²
Festigkeit längs (konditioniert): 2560 N/m
Festigkeit quer (konditioniert): 1850 N/m
Wasserrückhaltevermögen (DIN 53814): 178 %

## Patentansprüche

1. Cellulosecarbamat-Spinnlösung, enthaltend eine Lösung von Cellulosecarbamat in mindestens einer ionischen Flüssigkeit ausgewählt aus der Gruppe bestehend aus Ammonium-, Pyrazolium-, Cholinium , in 1- und 3-Stellung alkyl- oder arylsubstituierte Imidazoliumverbindungen und/oder Mischungen hieraus, **dadurch gekennzeichnet, dass** die Cellulosecarbamatkonzentration der Spinnlösung mindestens 15 Gew.-% beträgt und die Nullscherviskosität, gemessen bei 100 °C, im Bereich von 50 bis 7500 Pas liegt.

2. Spinnlösung nach Anspruch 1, **dadurch gekennzeichnet, dass** die mindestens eine ionische Flüssigkeit einen Schmelzpunkt unter 100 °C, bevorzugt einen Schmelzpunkt unter 75 °C, besonders bevorzugt einen Schmelzpunkt unter 50 °C aufweist.

3. Spinnlösung nach einem der vorhergehenden Ansprüche, **dadurch gekennzeichnet, dass** die ionische Flüssigkeit ausgewählt ist aus der Gruppe bestehend aus Butyl-methyl-imidazoliumacetat, Butyl-methyl-imidazoliumchlorid, Ethyl-methyl-imidazoliumchlorid, Ethyl-methyl-imidazoliumacetat, Butyl-ethyl-imidazoliumacetat, Butyl-ethyl-imidazoliumchlorid, Methyl-tetradecylimidazoliumchlorid, Butyl-methyl-imidazoliumbromid, Butyl-methyl-pyridiniumchlorid, Butyl-methyl-imidazoliumthiocyanat, Ethyl-methyl-imidazoliumthiocyanat, Butyl-ethyl-imidazoliumthiocyanat, Hexyl-dimethyl-imidazoliumhexafluoroborat, Ethoxymethyl-methyl-pyrrolidiniumchlorid, Hydroxypropyl-methyl-imidazoliumacetat, Hydroxypropyl-methyl-imidazoliumchlorid und/oder Butyl-methyl-pyridiniumchlorid.

4. Spinnlösung nach einem der vorhergehenden Ansprüche, **dadurch gekennzeichnet, dass** das Cellulosecarbamat einen DP_{cuoxam} von 150 bis 750, bevorzugt von 250 bis 550 aufweist.

5. Spinnlösung nach einem der vorhergehenden Ansprüche, **dadurch gekennzeichnet, dass** das Cellulosecarbamat einen Substitutionsgrad DS_{Carbamat} von 0,1 bis 1, bevorzugt von 0,2 bis 0,6 aufweist.

6. Spinnlösung nach einem der vorhergehenden Ansprüche, **dadurch gekennzeichnet, dass** die Cellulosecarbamatkonzentration zwischen 20 und 50 Gew.-%, bevorzugt zwischen 20 und 40 Gew.-%, besonders bevorzugt zwischen 20 und 30 Gew.-% beträgt.

7. Spinnlösung nach einem der vorhergehenden Ansprüche, **dadurch gekennzeichnet, dass** zur Herstellung der Spinnlösung getrocknetes Cellulosecarbamat verwendet wird.

8. Spinnlösung nach einem der Ansprüche 1 bis 7, **dadurch gekennzeichnet, dass** zur Herstellung der Spinnlösung wasserhaltiges Cellulosecarbamat eingesetzt wird und der Lösevorgang bei reduziertem Druck kleiner 0,9 bar durchgeführt wird.

9. Spinnlösung nach einem der vorhergehenden Ansprüche, **dadurch gekennzeichnet, dass** die Nullscherviskosität, gemessen bei 100 °C, im Bereich
von 50 bis 5000 Pas, bevorzugt von 150 bis 2500 Pas und besonders bevorzugt von 250 bis 1250 Pas liegt.

10. Verfahren zur Herstellung eines Cellulosecarbamat-Vliesstoffes, wobei eine Spinnlösung nach einem der vorhergehenden Ansprüche in einem Schmelzblasprozess durch einen Düsenblock mit mindestens 20 Düsenlöchern extrudiert wird, die aus dem Düsenblock austretenden Fasern durch einen temperierbaren Luftstrom verstreckt sowie durch Besprühen mit einer Koagulationsflüssigkeit koaguliert werden und anschließend entweder
a) die Fasern als Endlosfasern ausgebildet werden und daraus ein Wirrgelege gebildet wird, oder
b) die Fasern als Fasern mit endlicher Länge ausgebildet werden und daraus ein Wirrgelege hergestellt wird.

11. Verfahren nach vorhergehendem Anspruch, **dadurch gekennzeichnet, dass** die Spinnlösung durch einen Düsenblock mit 150 bis 10.000, bevorzugt 500 bis 5.000 Düsenlöchern pro Meter, extrudiert wird.

12. Verfahren nach einem der Ansprüche 10 oder 11,
**dadurch gekennzeichnet, dass** der Durchmesser der Düsenlöcher unabhängig voneinander von 0,05 bis 1 mm, bevorzugt von 0,25 bis 0,6 mm beträgt.

13. Verfahren nach einem der Ansprüche 10 bis 12, **dadurch gekennzeichnet, dass** die Temperatur der Spinnlösung im Düsenblock zwischen 50 und 150 °C, bevorzugt von 80 bis 130 °C, besonders bevorzugt von 90 bis 120 °C eingestellt wird.

14. Verfahren nach einem der Ansprüche 10 bis 13, **dadurch gekennzeichnet, dass** die Spinnlösungsfördermenge pro Düsenloch und Minute von 0,25 bis 5 g, bevorzugt von 0,75 bis 3 g eingestellt wird.

15. Verfahren nach einem der Ansprüche 10 bis 14, **dadurch gekennzeichnet, dass** als Koagulationsflüssigkeit Wasser oder eine wässrige Lösung mindestens einer ionischen Flüssigkeit eingesetzt wird.

16. Verfahren nach vorhergehendem Anspruch, **dadurch gekennzeichnet, dass** die Gewichtskonzentration der mindestens einen ionischen Flüssigkeit in der wässrigen Lösung von 0,5 bis 50 Gew.-%, bevorzugt von 2 bis 25 Gew.-% beträgt.

## Claims

1. A cellulose carbamate spinning solution, containing a solution of cellulose carbamate in at least one ionic liquid selected from the group consisting of ammonium compounds, pyrazolium compounds, cholinium compounds, imidazolium compounds alkyl-substituted or aryl-substituted in the 1- and 3-position and/or mixtures thereof, **characterised in that** the cellulose carbamate concentration of the spinning solution is at least 15% by weight and the zero shear viscosity, measured at 100°C, lies in the range from 50 to 7500 Pa·s.

2. A spinning solution according to Claim 1, **characterised in that** the at least one ionic liquid has a melting point of lower than 100°C, preferably a melting point of lower than 75°C, particularly preferably a melting point of lower than 50°C.

3. A spinning solution according to one of the preceding claims, **characterised in that** the ionic liquid is selected from the group consisting of butyl methylimidazolium acetate, butyl methylimidazolium chloride, ethyl methylimidazolium chloride, ethyl methylimidazolium acetate, butyl ethylimidazolium acetate, butyl ethylimidazolium chloride, methyl tetradecylimidazolium chloride, butyl methylimidazolium bromide, butyl methylpyridinium chloride, butyl methylimidazolium thiocyanate, ethyl methylimidazolium thiocyanate, butyl ethylimidazolium thiocyanate, hexyl dimethylimidazolium hexafluoroborate, ethoxymethyl methylpyrrolidinium chloride, hydroxypropyl methylimidazolium acetate, hydroxypropyl methylimidazolium chloride and/or butyl methylpyridinium chloride.

4. A spinning solution according to one of the preceding claims, **characterised in that** the cellulose carbamate has a DP_{cuoxam} of 150 to 750, preferably from 250 to 550.

5. A spinning solution according to one of the preceding claims, **characterised in that** the cellulose carbamate has a degree of substitution DS_{Carbamate} of 0.1 to 1, preferably from 0.2 to 0.6.

6. A spinning solution according to one of the preceding claims, **characterised in that** the cellulose carbamate concentration lies between 20 and 50% by weight, preferably between 20 and 40% by weight, particularly preferably between 20 and 30% by weight.

7. A spinning solution according to one of the preceding claims, **characterised in that** dried cellulose carbamate is used to produce the spinning solution.

8. A spinning solution according to one of Claims 1 to 7, **characterised in that** aqueous cellulose carbamate is used to produce the spinning solution and the dissolution operation is carried out at reduced pressure of less than 0.9 bar.

9. A spinning solution according to one of the preceding claims, **characterised in that** the zero shear viscosity, measured at 100°C, lies in the range from 50 to 5000 Pa·s, preferably from 150 to 2500 Pa·s and particularly preferably from 250 to 1250 Pa·s.

10. A process for the production of a cellulose carbamate non-woven material, wherein a spinning solution according to one of the preceding claims is extruded in a melt-blowing process through a nozzle block with at least 20 nozzle orifices, the fibres emerging from the nozzle block are stretched by a temperature-controllable air flow and are coagulated by spraying with a coagulation liquid and then either
a) the fibres are formed as continuous filaments and a random laid fabric is formed therefrom, or
a) the fibres are formed as fibres of finite length and a random laid fabric is formed therefrom.

11. A process according to the preceding claim, **characterised in that** the spinning solution is extruded through a nozzle block with 150 to 10,000, preferably 500 to 5,000, nozzle orifices per metre.

12. A process according to one of Claims 10 or 11, **characterised in that** the diameter of the nozzle orifices, independently of each other, is from 0.05 to 1 mm, preferably from 0.25 to 0.6 mm.

13. A process according to one of Claims 10 to 12, **characterised in that** the temperature of the spinning solution in the nozzle block is set to between 50 and 150°C, preferably from 80 to 130°C, particularly preferably from 90 to 120°C.

14. A process according to one of Claims 10 to 13, **characterised in that** the delivery rate of spinning solution per nozzle orifice and per minute is set from 0.25 to 5 g, preferably from 0.75 to 3 g.

15. A process according to one of Claims 10 to 14, **characterised in that** water or an aqueous solution of at least one ionic liquid is used as coagulation liquid.

16. A process according to the preceding claim, **characterised in that** the weight concentration of the at least one ionic liquid in the aqueous solution is from 0.5 to 50% by weight, preferably from 2 to 25% by weight.

## Revendications

1. Solution de filage de carbamate de cellulose, contenant une solution de carbamate de cellulose dans au moins un liquide ionique, choisi dans le groupe constitué de composés d'ammonium, de pyrazolium, de cholinium, d'imidazolium substitués par un alkyle ou un aryle en positions 1 et 3 et/ou de mélanges de ceux-ci, **caractérisée en ce que** la concentration de carbamate de cellulose de la solution de filage est d'au moins 15 % en poids et la viscosité à cisaillement nul, mesurée à une température de 100 °C, se situe dans la plage de 50 à 7500 Pa.s.

2. Solution de filage selon la revendication 1, **caractérisée en ce que** le au moins un liquide ionique présente un point de fusion inférieur à 100 °C, de préférence un point de fusion inférieur à 75 °C, mieux encore un point de fusion inférieur à 50 °C.

3. Solution de filage selon l'une quelconque des revendications précédentes, **caractérisée en ce que** le liquide ionique est choisi dans le groupe constitué des substances suivantes : acétate de butylméthylimidazolium, chlorure de butylméthylimidazolium, chlorure d'éthylméthylimidazolium, acétate d'éthylméthylimidazolium, acétate de butyléthylimidazolium, chlorure de butyléthylimidazolium, chlorure de méthyltétradécylimidazolium, bromure de butylméthylimidazolium, chlorure de butylméthylpyridinium, thiocyanate de butylméthylimidazolium, thiocyanate d'éthylméthylimidazolium, thiocyanate de butyléthylimidazolium, hexafluoroborate d'hexyldiméthylimidazolium, chlorure d'éthoxyméthylméthylpyrrolidinium, acétate d'hydroxypropylméthylimidazolium, chlorure d'hydroxypropylméthylimidazolium et/ou chlorure de butylméthylpyridinium.

4. Solution de filage selon l'une quelconque des revendications précédentes, **caractérisée en ce que** le carbamate de cellulose présente un DP_{cuoxam} de 150 à 750, de préférence de 250 à 550.

5. Solution de filage selon l'une quelconque des revendications précédentes, **caractérisée en ce que** le carbamate de cellulose présente un degré de substitution DS_{Carbamate} de 0,1 à 1, de préférence de 0,2 à 0,6.

6. Solution de filage selon l'une quelconque des revendications précédentes, **caractérisée en ce que** la concentration de carbamate de cellulose est comprise entre 20 et 50 % en poids, de préférence entre 20 et 40 % en poids, mieux encore entre 20 et 30 % en poids.

7. Solution de filage selon l'une quelconque des revendications précédentes, **caractérisée en ce que** l'on utilise du carbamate de cellulose séché pour préparer la solution de filage.

8. Solution de filage selon l'une quelconque des revendications 1 à 7, **caractérisée en ce que** l'on utilise du carbamate de cellulose contenant de l'eau pour préparer la solution de filage et **en ce que** l'on réalise l'opération de dissolution à une pression réduite inférieure à 0,9 bar.

9. Solution de filage selon l'une quelconque des revendications précédentes, **caractérisée en ce que** la viscosité à cisaillement nul, mesurée à une température de 100 °C, se situe dans la plage de 50 à 5000 Pa.s, de préférence de 150 à 2500 Pa.s et, mieux encore, de 250 à 1250 Pa.s.

10. Procédé de fabrication d'un non-tissé de carbamate de cellulose, dans lequel une solution de filage selon l'une quelconque des revendications précédentes est extrudée selon un procédé de soufflage en fusion à travers un bloc filière ayant au moins 20 orifices de filière, en ce que les fibres sortant du bloc filière sont étirées à travers un courant d'air à température équilibrable et coagulées par pulvérisation avec un liquide de coagulation, ou
a) les fibres se présentent sous la forme de fibres sans fin et forment un tissu à fibres emmêlées, ou
b) les fibres se présentent sous la forme de fibres de longueur finie et forment un tissu à fibres emmêlées.

11. Procédé selon la revendication précédente, **caractérisé en ce que** la solution de filage est extrudée à travers un bloc filière ayant 150 à 10 000, de préférence 500 à 5000 orifices de filière par mètre.

12. Procédé selon l'une quelconque des revendications 10 ou 11, **caractérisé en ce que** le diamètre des orifices de filière est, indépendamment l'un de l'autre, de 0,05 à 1 mm, de préférence de 0,25 à 0,6 mm.

13. Procédé selon l'une quelconque des revendications 10 à 12, **caractérisé en ce que** la température de la solution de filage dans le bloc filière est réglée entre 50 et 150 °C, de préférence entre 80 et 130 °C, mieux encore entre 90 et 120 °C.

14. Procédé selon l'une quelconque des revendications 10 à 13, **caractérisé en ce que** le débit de solution de filage par orifice de filière et par minute est réglée à une valeur de 0,25 à 5 g, de préférence de 0,75 à 3 g.

15. Procédé selon l'une quelconque des revendications 10 à 14, **caractérisé en ce que** l'on utilise comme liquide de coagulation de l'eau ou une solution aqueuse d'au moins un liquide ionique.

16. Procédé selon la revendication précédente, **caractérisé en ce que** la concentration en poids du au moins un liquide ionique dans la solution aqueuse est de 0,5 à 50 % en poids, de préférence de 2 à 25 % en poids.
